# EUROPEAN PATENT APPLICATION

(11) **EP 1 970 266 A1**
(43) Date of publication of application: **17.09.2008**
(21) Application number: 08250875.5
(22) Date of filing: 14.03.2008
(51) Int. Cl.: B60R 25/04

(54) **Keyless entry system**

(30) Priority: 15.03.2007 JP 2007067001
(71) Applicant: Yamaha Hatsudoki Kabushiki Kaisha, Iwata-shi, Shizuoka 438-8501 (JP)
(72) Inventor: Yoshizawa, Akihiro, Iwata-shi Shizuoka-ken 438-8501 (JP)
(74) Representative: Lamb, Martin John Carstairs

(57) **Abstract**

A keyless entry system (1) includes a portable device (30) carried by a passenger and a vehicle control device (10) for carrying out a certification process for the portable device (30) to lock or unlock a device subject to locking (106), the device mounted to a vehicle (100), on the basis of a result of the certification process. The portable device (30) sends instruction information for giving an instruction to limit unlocking of the device subject to locking (106) to the vehicle control device (10) in accordance with an instruction from the passenger. The vehicle control device (10) maintains locking of the device subject to locking (106) in the case of receiving the instruction information from the portable device (30).

## Description

### FIELD OF THE INVENTION

The invention relates to a technology for limiting unlocking of a device subject to control, such as an engine and a steering unit in a keyless entry system of a straddle-type vehicle.

### BACKGROUND TO THE INVENTION

Keyless entry systems are known which enable an engine and such to be started without insertion of a key into a key cylinder in a straddle-type vehicle such as a motorcycle. Such known keyless entry systems typically comprise: a portable device holding preset identification information and carried by a passenger; and a vehicle control device mounted to a vehicle for locking/unlocking a steering unit or limiting/allowing a start of an engine.

Generally, , a passenger carries out a predetermined switching operation after the portable device approaches a vehicle and enters a communication area. The vehicle control device then receives identification information from the portable device to execute a certification process for the portable device on the basis of the identification information. The vehicle control device releases locking of a steering unit or allows an engine to start when the portable device is judged to be a proper device registered in the vehicle control device in advance.

In such a keyless entry system, however, there is a possibility of unlocking of a steering unit and such without any intention of a passenger. For example, there is some possibility that the certification process for the portable device is performed to unlock the steering unit when the portable device is in the communication area and a person other than the passenger carries out the predetermined switching operation described above even in the case that the passenger is carrying out some work or the like in the neighborhood of a vehicle without intention of unlocking of a steering unit.

In order to prevent such a case, it has been proposed to include a switch in a portable device for stopping a communication function with a vehicle control device. Such a system is disclosed in JP-A-2005-104197. In this system, no identification information is sent from the portable device to the vehicle control device when a passenger stops the communication function through a switching operation of the portable device. Accordingly, no certification process for the portable device is carried out. This allows locking of a steering unit to be prevented from being released by a person other than the passenger without any intention of the passenger.

In the keyless entry system disclosed in JP-A-2005-104197, however, convenience is reduced in some cases since the communication function of the portable device is stopped for the purpose of preventing a steering unit from being unlocked without intention of a passenger. Some keyless entry systems, for example, have a function that the portable device sends to a vehicle a signal indicating a predetermined switching operation of the portable device by a passenger to turn on a light of a vehicle in order to indicate to the passenger a location of the vehicle in a dimly-lit place. In the keyless entry system disclosed in JP-A-2005-104197, however, the passenger cannot use such a function when the communication function of the portable device is stopped.

In view of the above, an object of the invention is to prevent locking of a device subject to control such as an engine and a steering unit from being released without any intention of a passenger in a keyless entry system of a straddle-type vehicle as well as improving convenience of the keyless entry system.

### SUMMARY OF THE INVENTION

According to an aspect of the present invention there is provided a keyless entry system comprising:
a portable device; and
a vehicle control device for carrying out a certification process for the portable device to lock or unlock a vehicle lockable device on the basis of a result of the certification process,
wherein the portable device includes an input device for receiving an instruction from a user and is adapted to send instruction information for giving an instruction to limit unlocking of the lockable device to the vehicle control device in accordance with the instruction received from the passenger by means of the input device,
and wherein the vehicle control device is adapted to maintain locking of the lockable device upon receiving the instruction information from the portable device.

The lockable device defined herein may also be defined as a device subject to locking.

The portable device may be adapted to send identification information inherent in the portable device together with the instruction information when the instruction information is sent, and the vehicle control device may be adapted to carry out the certification process on the basis of the identification information of the portable device.

The portable device may further include a storing device for storing, as instruction receive information, information indicating that the input device receives an instruction to limit unlocking of the lockable device from a user when the input device receives the instruction. The vehicle control device may be adapted to send demand information for demanding a response from the portable device. The portable device may be adapted to send the instruction information to the vehicle control device in the case of receiving the demand information from the vehicle control device while the storing device holds the instruction receive information.

The portable device may further include an information device adapted to inform a passenger that the storing device stores the instruction receive information.

The portable device may be adapted to send and receive condition information related to a condition of the portable device or a vehicle to and from the vehicle control device.

The portable device may further include a battery remaining quantity detection circuit for detecting remaining quantity of a battery used as a driving source of the portable device and may be adapted to send information related to the battery remaining quantity as the condition information.

A keyless entry system in accordance with another aspect of the invention comprises: a portable device carried by a passenger; and a vehicle control device for carrying out a certification process for the portable device to lock or unlock a device subject to locking, the device mounted to a vehicle, on the basis of a result of the certification process. The portable device includes an input device for receiving an instruction from the passenger and sends instruction information for giving an instruction to limit unlocking of the device subject to locking to the vehicle control device in accordance with the instruction received from the passenger by means of the input device while the vehicle control device maintains locking of the device subject to locking in the case of receiving the instruction information from the portable device.

In accordance with the invention, locking of a lockable device of a vehicle can be maintained in accordance with an instruction from a passenger without stopping the communication function of the portable device, and therefore, convenience of the keyless entry system can be improved.

The portable device may send identification information inherent in the portable device together with the instruction information when the instruction information is sent and the vehicle control device carries out the certification process on the basis of the identification information of the portable device. T the vehicle control device can thus identify the portable device, which has sent the instruction information.

The portable device may further include a storing device for storing, as instruction receive information, information indicating that the input device receives an instruction to limit unlocking of the device subject to locking from a passenger when the input device receives the instruction. The vehicle control device may send demand information for demanding a response from the portable device and the portable device may send the instruction information to the vehicle control device in the case of receiving the demand information from the vehicle control device while the storing device holds the instruction receive information. The portable device can thus inform the vehicle control device that an instruction to limit unlocking of the device subject to control has been received when the demand information is sent from the vehicle control device.

The portable device may further include an information device for informing a passenger that the storing device stores the instruction receive information. This allows the passenger carrying the portable device to be informed of an instruction to limit unlocking of the device subject to control even after the passenger gave the instruction.

The portable device may send and receive condition information related to a condition of the portable device or a vehicle to and from the vehicle control device. Convenience of the keyless entry system is thus improved. Moreover, the portable device may further include a battery remaining quantity detection circuit for detecting remaining quantity of a battery used as a driving source of the portable device and send information related to the battery remaining quantity as the condition information.

According to a further aspect of the invention there is provided a vehicle comprising a keyless entry system according to any previous aspect.

The vehicle control device may be mounted on the vehicle. The portable device may be adapted to be carried by a user, such as a passenger.

### BRIEF DESCRIPTION OF THE DRAWINGS

These and other aspects of the present invention will now be described, by way of example only, with reference to the accompanying drawings, in which:
Fig. 1 is a side view of a motorcycle to which a keyless entry system is applied, the keyless entry system being an example of an embodiment of the invention;
Fig. 2 is a block diagram showing a structure of the keyless entry system and a vehicle control device;
Fig. 3 is a block diagram showing a structure of a portable device of the keyless entry system;
Fig. 4 is a block diagram showing a function of a process executed by a control part of the portable device;
Fig. 5 is a block diagram showing a function of a process executed by a control part of the vehicle control device; and
Fig. 6 is a sequence diagram showing an example of a process executed by the vehicle control device and the portable device in the keyless entry system.

### DETAILED DESCRIPTION OF THE DRAWINGS

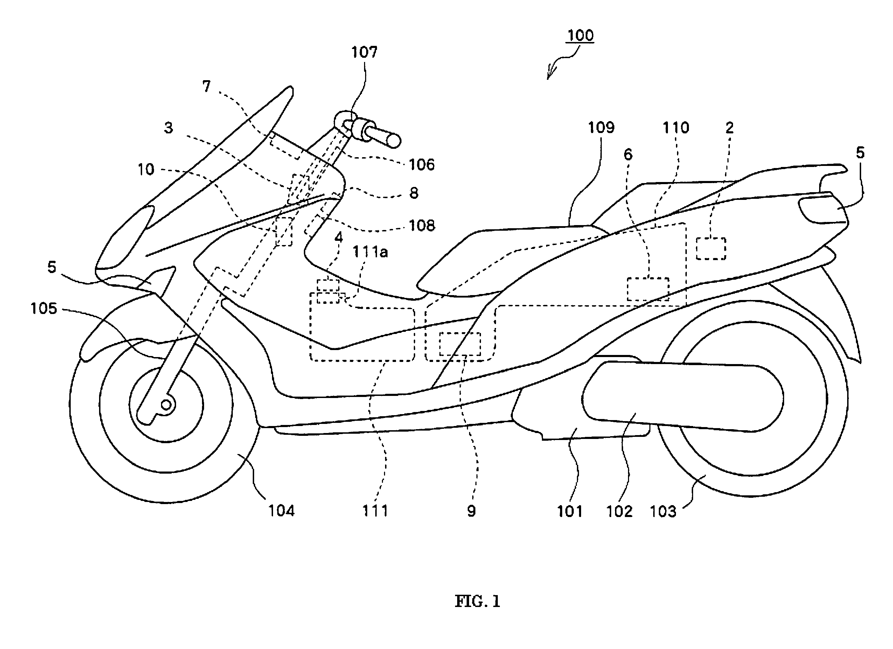

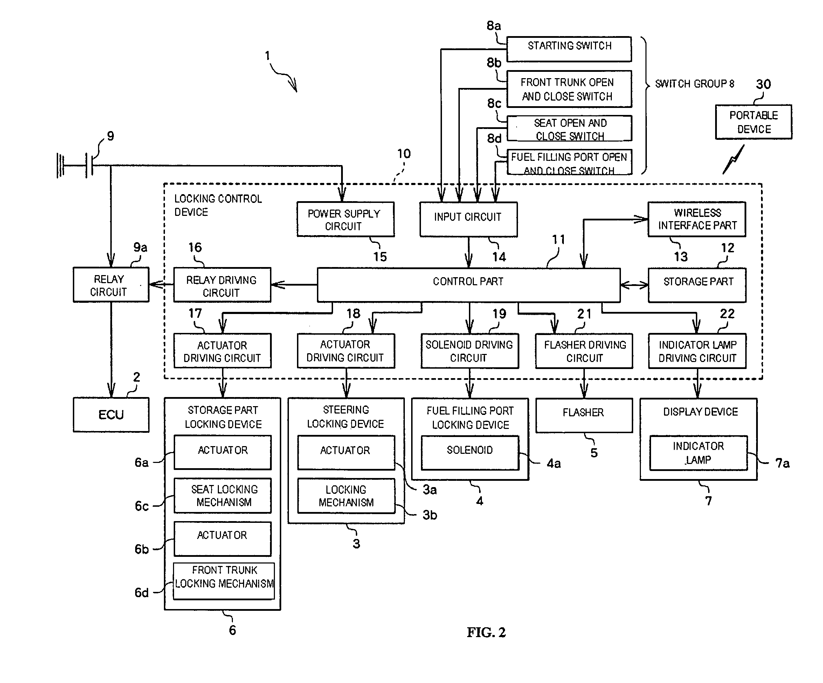

Fig. 1 is a side view of a motorcycle 100 to which a keyless entry system 1, which is an example of an embodiment of the invention, is applied. Fig. 2 is a block diagram showing a structure of the keyless entry system 1 and a vehicle control device 10 included in the keyless entry system 1, the vehicle control device 10 being mounted to the motorcycle 100.

As shown in Fig. 2, the keyless entry system 1 includes a portable device 30 carried by a passenger. The motorcycle 100 comprises an engine control unit (ECU) 2, a steering locking device 3, a fuel filling port locking device 4, a flasher 5, a storage part locking device 6, a display device 7, a switch group 8, a battery 9 and the above-mentioned vehicle control device 10, as shown in Fig. 1. the motorcycle 100 will now be described.

The ECU 2 includes a ROM (a read only memory) and a RAM (a random access memory) to control an engine 101 in accordance with a program stored in the ROM or the RAM. The ECU 2 controls ignition timing of the engine 101 and jet quantity of fuel supplied to the engine 101 and starts the engine 101, for example. In the embodiment, controlling the vehicle control device 10 to supply the ECU 2 with power from the battery 9 allows the ECU 2 to operate. Driving force of the engine 101 is transmitted to a rear wheel 103 through a driving force transmitting mechanism 102 including a belt and a transmission.

A front wheel 104 is supported on a lower end part of a front fork 105. A steering shaft 106 is provided in the upper part of the front fork 105 for transmitting a handle operation by a passenger to the front wheel 104. The steering locking device 3 is provided adjacent to the steering shaft 106. The steering locking device 3 includes an actuator 3a and a locking mechanism 3b receiving power from the actuator 3a to operate (refer to Fig. 2). The actuator 3a operates by power supplied from the vehicle control device 10 to lock the steering shaft 106 by means of the locking mechanism 3b so that the steering shaft 106 would not rotate or to release the locking with the locking mechanism 3b.

A handle 107 is provided in the upper part of the steering shaft 106, and the display device 7 is provided on the front side of the handle 107. The display device 7 includes a digitally displayed speed meter, a tachometer and the like, for example. In the embodiment, the display device 7 comprises an indicator lamp (an LED (a light emitting diode), for example) 7a turning on by the power supplied from the vehicle control device 10 (refer to Fig. 2). The indicator lamp 7a informs a passenger of a condition of the portable device 30 or the motorcycle 100. The indicator lamp 7a turns on when the battery remaining quantity of the portable device 30 is reduced, for example, to inform the passenger of this occurrence.

On the rear side of the steering shaft 106 there is provided a front trunk 108 capable of opening and closing. The front trunk 108 is arranged to be able to open toward a passenger (to a side where a passenger rides) in the example. A seat 109 provided so as to be able to open and close is arranged above the engine 101. A trunk 110 is provided under the seat 109. The storage part locking device 6 is provided under the seat 109 adjacent to the trunk 110.

The storage part locking device 6 is a device for locking or unlocking a storage part provided so as to be able to open and close for the purpose of storing a variety of objects. In the embodiment, the storage part locking device 6 comprises actuators 6a and 6b, a seat locking mechanism 6c receiving power from the actuator 6a to operate and a front trunk locking mechanism 6d receiving power from the actuator 6b to operate (refer to Fig. 2). The actuator 6a operates by the power supplied from the vehicle control device 10 to lock and unlock the seat 109 by means of the seat locking mechanism 6c. The actuator 6b operates by the power supplied from the vehicle control device 10 to lock and unlock the front trunk 108 by means of the front trunk locking mechanism 6d. The front trunk 108 and the seat 109 are connected through a wire (not shown), for example, to the storage part locking device 6. The storage part locking device 6 locks and unlocks the front trunk 108 and the seat 109 through the wire.

A fuel tank 111 is provided on the front side of the seat 109. The fuel tank 111 is provided in its upper part with a fuel filling port 111a. The fuel filling port locking device 4 is provided adjacent to the fuel filling port 111a. The fuel filling port locking device 4 includes a solenoid 4a in the example described here (refer to Fig. 2). The solenoid 4a operates by the power supplied from the vehicle control device 10 to lock and unlock a lid of the fuel filling port 111a.

The flashers 5 are mounted to front and rear parts of a vehicle body to flash on and off in accordance with a switching operation by a passenger for the purpose of indicating an intended direction the motorcycle 100. In the example described here, the flasher 5 turns on by the power supplied from the vehicle control device 10 for the purpose of showing a passenger a parking location of the motorcycle 100.

The switch group 8 comprising plural switches is provided under the handle 107. The switch group 8 includes a starting switch 8a, a front trunk open and close switch 8b, a seat open and close switch 8c and a fuel filling port open and close switch 8d, as shown in Fig. 2, in the example described here. Each of the switches is used for inputting a signal according to a switching operation by a passenger into the vehicle control device 10.

The battery 9 is provided in the seat 109. The battery 9 is connected to the vehicle control device 10 and the ECU 2 to supply the same with power, as shown in Fig. 2. A relay circuit 9a is provided between the ECU 2 and the battery 9. The relay circuit 9a operates in accordance with a signal inputted from the vehicle control device 10 to start and stop power supply to the ECU 2. The ECU 2 is supplied with power from the battery 9 when the relay circuit 9a is on. This allows the ECU 2 to operate.

The vehicle control device 10 executes a certification process for the portable device 30 to lock or unlock a device subject to control, the device mounted to the vehicle, (refer to a device subject to locking, hereinafter) on the basis of a result of the certification process. In the above context, locking of the device subject to locking by means of the vehicle control device 10 means limitation of an operation of the device subject to locking. On the other hand, unlocking of the device subject to locking means allowance of an operation of the device subject to locking. Further, the description is made in the example, assuming that the ECU 2, the steering shaft 106, the fuel filling port 111a, the seat 109 and the front trunk 108 are the devices subject to locking, which are locked and unlocked by means of the vehicle control device 10. The ECU 2, for example, is allowed to operate when power of the battery 9 is supplied while the ECU 2 is limited to operate when the power supply is stopped, as described above. As for the steering shaft 106, the locking mechanism 3b of the steering locking device 3 allows or limits rotation of the steering shaft 106.

Structures of the vehicle control device 10 and the portable device 30 will now be described. First, the structure of the vehicle control device 10 is described with reference to Fig. 2. The vehicle control device 10 includes a control part 11, a storage part 12, a wireless interface part 13, an input circuit 14, a power supply circuit 15, a relay driving circuit 16, actuator driving circuits 17 and 18, a solenoid driving circuit 19, a flasher driving circuit 21 and an indicator lamp driving circuit 22, as shown in Fig. 2.

The storage part 12 includes a ROM, a RAM and such and holds a program executed by the control part 11. Moreover, the storage part 12 holds identification information preset in the portable device 30 in the example. The identification information is information for identifying respective portable devices in the case of plural portable devices. The identification information is independently set for each portable device in a manufacturing stage, for example. The identification information is used in the process of certification of the portable device 30, the process executed in the control part 11.

The control part 11 includes a CPU (a central processing unit) and executes a program held in the storage part 12 to control the whole of the vehicle control device 10. The process executed in the control part 11 will be described later in detail.

The wireless interface part 13 includes a radio communication antenna. The wireless interface part 13 converts and amplifies a digital signal inputted from the control part 11 to send the signal as a radio wave signal as well as converting and amplifying a radio wave signal received from the portable device 30 into a digital signal to output the signal to the control part 11. Particularly, in the embodiment, the wireless interface part 13 sends and receives information for demanding that the identification information should be sent, information for giving an instruction to limit unlocking of the device subject to locking, condition information for indicating a condition of the portable device 30 or the motorcycle 100 and the like to and from the portable device 30 in accordance with an instruction from the control part 11.

The input circuit 14 is connected to the respective switches included in the switch group 8. The input circuit 14 converts an analog signal inputted from each switch into a digital signal to input the converted signal to the control part 11.

The power supply circuit 15 converts power supplied from the battery 9 into operation voltage of the respective parts forming the vehicle control device 10 to supply the power. Connection lines connecting the power supply circuit 15 and the respective parts are omitted from Fig. 2 for clarity.

The relay driving circuit 16 is connected to the relay circuit 9a. The relay driving circuit 16 controls an electric signal supplied to the relay circuit 9a on the basis of a signal inputted from the control part 11 to set the relay circuit 9a at an on or off condition. The actuator driving circuit 17 is connected to the above-mentioned storage part locking device 6. The actuator driving circuit 17 supplies the actuators 6a and 6b with the driving power in accordance with a signal inputted from the control part 11. The actuator driving circuit 18 is connected to the above-mentioned steering locking device 3. The actuator driving circuit 18 supplies the actuator 3a with the driving power in accordance with a signal inputted from the control part 11. The solenoid driving circuit 19 is connected to the fuel filling port locking device 4. The solenoid driving circuit 19 supplies the solenoid 4a with the driving power in accordance with a signal inputted from the control part 11 to lock or unlock the lid of the fuel filling port 111a. The flasher driving circuit 21 is connected to the flasher 5. The flasher driving circuit 21 supplies the flasher 5 with power in accordance with a signal inputted from the control part 11 to flash the flasher 5 on and off. The indicator lamp driving circuit 22 is connected to the display device 7. The indicator lamp driving circuit 22 supplies the indicator lamp 7a of the display device 7 with power in accordance with a signal inputted from the control part 11 to turn the indicator lamp 7a on and off.

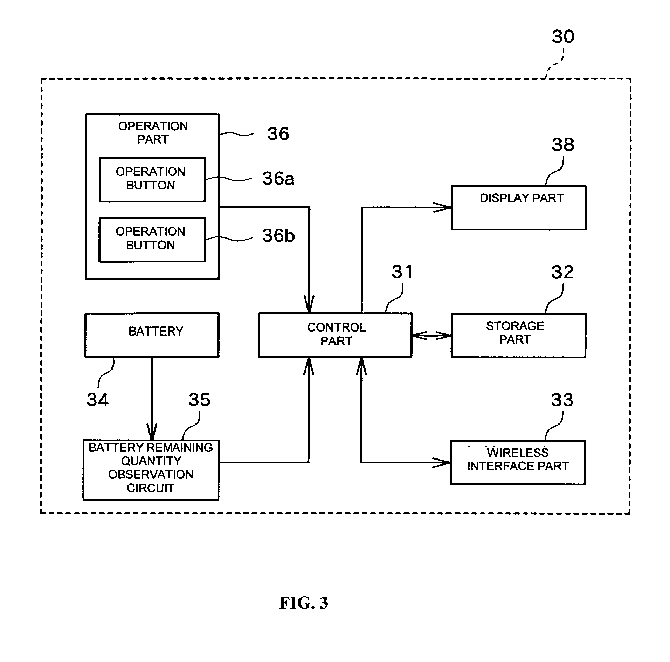

A structure of the portable device 30 will now be described. Fig. 3 is a block diagram showing the structure of the portable device 30. The portable device 30 includes a control part 31, a storage part 32, a wireless interface part 33, a battery 34, a battery remaining quantity observation circuit 35, an operation part 36 and a display part 38, as shown in Fig. 3.

The storage part 32 includes a ROM, a RAM and such and holds a program executed by the control part 31. Moreover, the storage part 32 holds identification information independently determined in a manufacturing stage of the portable device 30 or the like, in the example.

The control part 31 includes a CPU and executes a program held in the storage part 32 to control the whole of the portable device 30. The process executed in the control part 31 will be described later in detail.

The wireless interface part 33 includes a radio communication antenna. The wireless interface part 33 converts and amplifies a digital signal inputted from the control part 31 to send the signal as a radio wave signal as well as converting and amplifying a radio wave signal received from the vehicle control device 10 into a digital signal to output the digital signal to the control part 31. Particularly, in the embodiment, the wireless interface part 33 sends the identification information of the portable device 30, information for giving an instruction to limit unlocking of the device subject to locking by means of the vehicle control device 10, information for indicating remaining quantity of the battery 34 and the like and receives information for demanding that the identification information should be sent, in accordance with an instruction from the control part 31.

The battery 34 is a small-sized secondary battery or primary battery or the like, for example, and supplies respective parts of the portable device 30 with operating power. Connection lines connecting the battery 34 with the respective parts of the portable device 30 are omitted from Fig. 3 for clarity.

The battery remaining quantity observation circuit 35 is connected to the battery 34. The battery remaining quantity observation circuit 35 observes output voltage of the battery 34, for example, to judge that a little battery remaining quantity is left when the voltage outputted from the battery 34 is below a predetermined threshold value, and then, inputs a signal showing the fact to the control part 31.

The operation part 36 includes operation buttons 36a and 36b for receiving an instruction from a passenger carrying the portable device 30 and inputs a signal according to a button operation by the passenger into the control part 11. Particularly, the operation part 36 receives an instruction to limit unlocking of the device subject to locking (the ECU 2, the steering shaft 106, the fuel filling port 111a, the seat 109 or the front trunk 108 in the embodiment) to input a signal according to the instruction into the control part 11, in the embodiment. The signal inputted from the operation part 36 is converted into a digital signal in an analog-digital conversion circuit not shown, and then, inputted into the control part 11.

The display part 38 includes an LED, for example, and is turned on and off in accordance with a signal inputted from the control part 31.

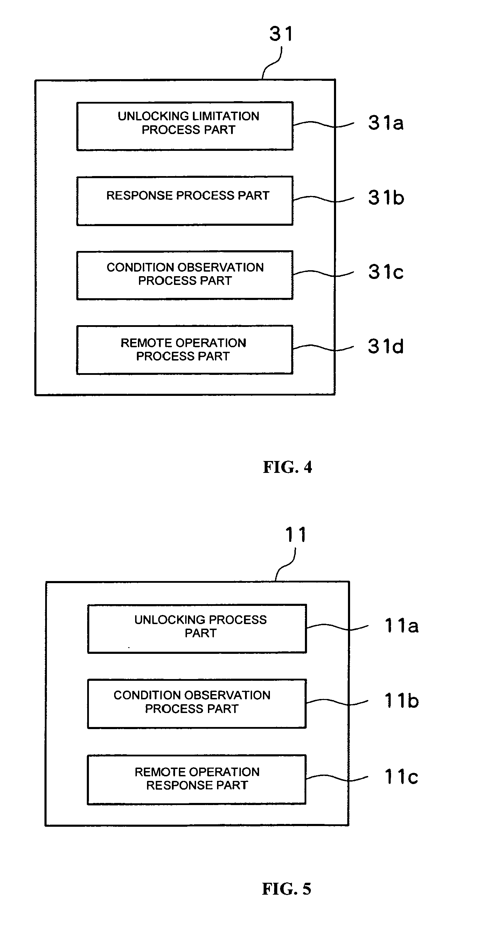

A process executed by the control part 11 of the vehicle control device 10 and a process executed by the control part 31 of the portable device 30 will now be described. First, the process executed by the control part 31 will be described. Fig. 4 is a block diagram of a function of the control part 31. The control part 31 functionally includes an unlocking limitation process part 31a, a response process part 31b, a condition observation process part 31c and a remote operation process part 31d, as shown in Fig. 4.

The unlocking limitation process part 31a stores information that the operation part 36 receives an instruction to limit unlocking of the device subject to locking (referred to as instruction receive information, hereinafter) in the storage part 32 in the case that the operation part 36 receives the instruction. The unlocking limitation process part 31a then removes the instruction receive information from the storage part 32 when the operation part 36 receives an instruction to release the limitation of unlocking. In the case that the instruction receive information is stored in the storage part 32, the unlocking limitation process part 31a turns the display part 38 on in a predetermined mode for the purpose of informing the passenger of the fact.

The response process part 31b executes a process for meeting a demand of a response in the case that the wireless interface part 33 receives from the vehicle control device 10 information of the demand of a response. The response process part 31b sends identification information stored in the storage part 32 in advance when the wireless interface part 33 receives information of a demand to send identification information (referred to as response demand information, hereinafter), for example.

Further, the response process part 31b sends to the vehicle control device 10 information demanded by the vehicle control device 10 (the identification information in the embodiment) as well as information indicating an instruction to limit unlocking of the device subject to locking (referred to as unlocking limitation instruction information, hereinafter) in the case of storing the instruction receive information in the storing part 32. The process is executed as follows, for example.

The response process part 31b judges whether the instruction receive information is stored in the storage part 32 or not when the wireless interface part 33 receives from the vehicle control device 10 the information of a demand of a response. In the case that the instruction receive information is stored, the response process part 31b sends the information demanded by the vehicle control device 10 as well as the unlocking limitation instruction information. The vehicle control device 10 sends the response demand information to the portable device 30 whenever a passenger turns on the starting switch 8a, the front trunk open and close switch 8b, the seat open and close switch 8c, the fuel filling port open and close switch 8d or the like.

The condition observation process part 31c observes a condition of the portable device 30. The condition observation process part 31c sends the condition information indicating the condition to the vehicle control device 10 through the wireless interface part 33 whether the unlocking limitation instruction information is stored in the storage part 32 or not. The condition information in the above context is information related to the remaining quantity of the battery 34 (referred to as battery remaining quantity information, hereinafter), for example. In this case, the condition observation process part 31c observes the remaining quantity of the battery on the basis of a signal inputted from the battery remaining quantity observation circuit 35. When the battery remaining quantity is below a predetermined threshold value, for example, the condition observation process part 31c sends information of the fact to the vehicle control device 10 as the battery remaining quantity information.

Furthermore, the condition observation process part 31c may send the condition information related to a condition of the portable device 30 (the above-mentioned battery remaining quantity information, for example) to the vehicle control device 10 in response to a demand to send the condition information in the case of receiving information of the demand from the vehicle control device 10.

Moreover, the condition observation process part 31c may send the unlocking limitation instruction information together with the condition information in accordance with whether the storage part 32 holds the instruction receive information or not in the case of sending the condition information related to a condition of the portable device 30. Specifically, the condition observation process part 31c judges whether the instruction receive information is stored in the storage part 32 or not in sending the condition information to the vehicle control device 10. In the case that the instruction receive information is stored, sent is the unlocking limitation instruction information together with the condition information demanded by the vehicle control device 10. In this case, the vehicle control device 10 may inform a passenger of contents indicated by the condition information after releasing the limitation of unlocking of the device subject to locking. The process carried out by the vehicle control device 10 will be described later.

In addition, the condition observation process part 31c may observe a condition of the motorcycle 100 on the basis of information sent from the vehicle control device 10. The process is executed as follows, for example.

The vehicle control device 10 demands that the portable device 30 should send the identification information whenever the starting switch 8a, the front trunk open and close switch 8b, the seat open and close switch 8c or the like is successively turned on. When the vehicle control device 10 receives the identification information as well as the unlocking limitation instruction information from the response process part 31b for the number of times predetermined in unit time (more than ten seconds, for example), sent to the portable device 30 is information indicating the fact (referred to as theft alarm information, hereinafter). The condition observation process part 31c of the portable device 30, which has received the theft alarm information, judges that there is a possibility of theft of the motorcycle 100. The condition observation process part 31c then turns on the display part 38 in a predetermined mode (flickering, for example), for example, for the purpose of informing a passenger of the possibility.

The remote operation process part 31d sends information indicating contents of remote operation of the motorcycle 100 (referred to as remote operation information, hereinafter) when a passenger carries out a predetermined button operation to input a signal instructing the remote operation through the operation part 36. The remote operation information is information giving an instruction to turn on the flasher 5 for the purpose of showing the passenger a location of the motorcycle 100 in a dimly-lit place and the like or information giving an instruction to unlock the seat 109, for example.

Further, the remote operation process part 31d may send the unlocking limitation instruction information in addition to the remote operation information on the basis of whether the instruction receive information is stored in the storage part 32 or not in sending the remote operation information. That is to say, the remote operation process part 31d judges whether the instruction receive information is stored in the storage part 32 or not in sending the remote operation information. In the case that the instruction receive information is stored, the instruction receive information may be sent to the vehicle control device 10 together with the remote operation information.

In the case that the instruction receive information is stored in the storage part 32, the remote operation process part 31d may uniformly send the remote operation information as well as the unlocking limitation instruction information or may send the unlocking limitation instruction information together with the remote operation information in accordance with the contents of an instruction in the remote operation information. It may be arranged, for example, that the unlocking limitation instruction information be sent together with the remote operation information when the remote operation information is information giving an instruction to unlock the seat 109 while the remote operation information be sent without the unlocking limitation instruction information regardless of whether the instruction receive information is stored in the storage part 32 or not when the remote operation information is information giving an instruction to turn on the flasher 5.

A process that the control part 11 of the vehicle control device 10 executes will now be described. Fig. 5 is a block diagram of a function of the control part 11. The control part 11 functionally includes an unlocking process part 11a, a condition observation process part 11b and a remote operation response part 11c, as shown in Fig. 5.

The unlocking process part 11a executes the certification process for the portable device 30 to carry out a process for unlocking the device subject to locking on the basis of a result of the certification process and whether the unlocking limitation instruction information is received from the portable device 30 or not. The process in the unlocking process part 11a is executed as follows, for example.

The unlocking process part 11a first sends the response demand information of a demand to send the identification information whenever a passenger turns on the starting switch 8a, the front trunk open and close switch 8b, the seat open and close switch 8c, the fuel filling port open and close switch 8d or the like. The unlocking process part 11a executes the certification process on the basis of the identification information when the identification information is received from the portable device 30. Specifically, the unlocking process part 11a judges whether or not the identification information stored in the storage part 12 in advance accords with the identification information received from the portable device 30. The portable device 30 is judged to be a proper portable device registered in advance in the case of accordance.

The unlocking process part 11a also judges whether or not the unlocking limitation instruction information is attached to the identification information received from the portable device 30. The unlocking process part 11a carries out a process of unlocking the device subject to locking when the portable device 30 is recognized to be a proper portable device and the received identification information has no unlocking limitation instruction information attached. In the case that the starting switch 8a is turned on, for example, a signal giving an instruction to turn on the relay circuit 9a is outputted to the relay driving circuit 16 while a signal giving an instruction to unlock the steering shaft 106 is outputted to the actuator driving circuit 18. A signal giving an instruction to unlock the front trunk 108 or the seat 109 is outputted to the actuator driving circuit 17 in the case that the seat open and close switch 8c or the front trunk open and close switch 8b is turned on. A signal giving an instruction to unlock the fuel filling port 111a is outputted to the solenoid driving circuit 19 when the fuel filling port open and close switch 8d is turned on.

On the other hand, the unlocking process part 11a outputs no signal described above to the relay driving circuit 16, the actuator driving circuit 18 or 17 or the solenoid driving circuit 19 when the unlocking limitation instruction information is attached to the received identification information. The unlocking process part 11a maintains a locking condition of the front trunk 108, the seat 109, the ECU 2, the steering shaft 106 or the fuel filling port 111a.

The condition observation process part 11b observes a condition of the portable device 30 on the basis of the condition information received from the portable device 30 to display contents indicated in the condition information on the display device 7. When the wireless interface part 13 receives the battery remaining quantity information indicating that the battery remaining quantity is below a predetermined threshold value from the portable device 30, for example, the condition observation process part 11b outputs a signal giving an instruction to turn on the indicator lamp 7a to the indicator lamp driving circuit 22.

In the case that the wireless interface part 13 receives the condition information as well as the unlocking limitation instruction information, the condition observation process part 11b may display the contents indicated in the condition information on the display device 7 after the limitation of unlocking of the device subject to locking is released without displaying on the display device 7 the contents indicated in the condition information in receiving the condition information and the unlocking limitation instruction information as described above. The process is executed as follows, for example.

The condition observation process part 11b stores the condition information in the storage part 12 when the wireless interface part 13 receives the condition information as well as the unlocking limitation instruction information. After that, in the case that turning on any switch included in the switch group 8, for example, causes the wireless interface part 13 to receive the identification information with no unlocking limitation instruction information and that the certification process on the basis of the identification information results in recognition that the portable device 30 is a proper portable device, displayed on the display device 7 are contents indicating the condition information stored in the storage part 12. In the case that the battery remaining quantity information is stored in the storage part 12 as the condition information, for example, the condition observation process part 11b outputs a signal giving an instruction to turn on the indicator lamp 7a to the indicator lamp driving circuit 22.

The condition observation process part 11b also observes a condition of the motorcycle 100 to send information obtained on the basis of a result of the observation to the portable device 30. The process is executed as follows, for example.

The unlocking process part 11a sends the response demand information of a demand to send the identification information to the portable device 30 whenever the starting switch 8a, the front trunk open and close switch 8b, the seat open and close switch 8c or the like is successively turned on. The condition observation process part 11b counts a frequency that the unlocking limitation instruction information is received from the portable device 30 together with the identification information. The condition observation process part 11b judges that the motorcycle 100 is likely to be stolen when the unlocking limitation instruction information is received for the number of times predetermined in unit time, and therefore, sends the theft alarm information indicating the fact to the portable device 30.

The remote operation response part 11c executes a process for controlling the motorcycle 100 on the basis of the remote operation information received from the portable device 30 and whether the unlocking limitation instruction information is attached to the remote operation information or not. The remote operation response part 11c judges whether the unlocking limitation instruction information is attached to the remote operation information or not when the remote operation information giving an instruction to unlock the seat 109 by means of the storage part locking device 6 is received from the portable device 30, for example. A signal giving an instruction to unlock the seat 109 is outputted to the actuator driving circuit 17 in the case that no unlocking limitation instruction information is attached. On the other hand, the remote operation response part 11c outputs no signal described above when the unlocking limitation instruction information is attached to the remote operation information. The remote operation response part 11c thus maintains a locking condition of the seat 109.

The remote operation response part 11c may execute a process based on the remote operation information in accordance with contents of the remote operation instructed on the basis of the remote operation information whether the unlocking limitation instruction information is attached or not. The remote operation response part 11c may output a signal giving an instruction to turn on the flasher 5 to the flasher driving circuit 21 even in the case that the unlocking limitation instruction information is attached to the remote operation information when the remote operation information giving an instruction to turn on the flasher 5 is received, for example.

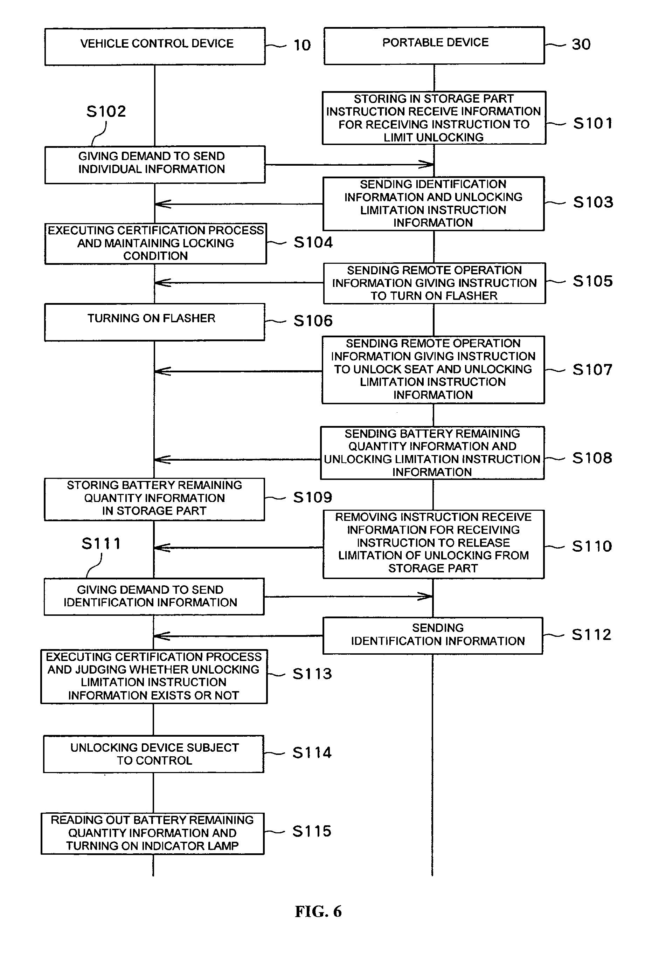

A flow of a process executed by the portable device 30 and the vehicle control device 10 will now be described. Fig. 6 is a sequence diagram showing an example of the process executed by the portable device 30 and the vehicle control device 10.

The unlocking limitation process part 31a stores the instruction receive information in the storage part 32 when the operation part 36 receives an instruction from a passenger to limit unlocking of the device subject to locking (the ECU 2, the steering shaft 106, the fuel filling port 111a, the seat 109 and the front trunk 108, which are described above, for example) (S101). After that, the unlocking process part 11a of the vehicle control device 10 sends the response demand information of a demand to send the identification information to the portable device 30 when the passenger turns on the starting switch 8a, the front trunk open and close switch 8b, the seat open and close switch 8c or the fuel filling port open and close switch 8d (S102). The response process part 31b of the portable device 30 judges whether the instruction receive information is stored in the storage part 32 or not. The instruction receive information is stored in S101 in the example. Accordingly, the response process part 31b sends the identification information of the portable device 30 as well as the unlocking limitation instruction information to the vehicle control device 10 (S103). The unlocking process part 11a of the vehicle control device 10 executes the certification process for the portable device 30 on the basis of the identification information received from the portable device 30 and also judges whether the unlocking limitation instruction information is attached to the identification information or not. The unlocking limitation instruction information is attached to the identification information in the example. Therefore, the unlocking process part 11a outputs no signal for unlocking the steering shaft 106, the ECU 2, the fuel filling port 111a, the seat 109, the front trunk 108 or the like to the actuator driving circuit 17 or 18, the solenoid driving circuit 19 or the relay driving circuit 16 to maintain a locking condition thereof (S104).

Following that, when the operation part 36 receives an instruction to turn on the flasher 5, the remote operation process part 31d of the portable device 30 sends the remote operation information of the fact to the vehicle control device 10 (S105). The remote control process part 31d may send the unlocking limitation instruction information together with the remote operation information since the instruction receive information is still stored in the storage part 32 in the example. The remote operation response part 11c outputs a signal giving an instruction to turn on the flasher 5 to the flasher driving circuit 21 when the vehicle control device 10 receives the remote operation information giving an instruction to turn on the flasher 5 (S106).

The remote operation process part 31d sends the unlocking limitation instruction information together with the remote operation information giving an instruction to unlock the seat 109 when the operation part 36 receives an instruction to unlock the seat 109 since the instruction receive information is still stored in the storage part 32 in the example (S107). The remote operation response part 11c of the vehicle control device 10, which has received the remote operation information, judges whether the unlocking limitation instruction information is attached to the remote operation information or not. The unlocking limitation instruction information is attached to the remote operation information in the example. Accordingly, no signal for unlocking the seat 109 is outputted to the actuator driving circuit 17 to maintain a locking condition.

When a signal indicating that the battery remaining quantity is below a predetermined threshold value is inputted from the battery remaining quantity observation circuit 35, the condition observation process part 31c of the portable device 30 sends the battery remaining quantity information indicating the fact as well as the unlocking limitation instruction information to the vehicle control device 10 since the instruction receive information is still stored in the storage part 32 in the example (S108). The condition observation process part 11b of the vehicle control device 10 stores the battery remaining quantity information in to the storage part 12 because the unlocking limitation instruction information is attached to the battery remaining quantity information (S109).

When the operation part 36 receives an instruction from the passenger to release the limitation of unlocking the device subject to locking after that, the unlocking limitation process part 31a removes the instruction receive information from the storage part 32 (S110). In the case that the passenger then turns on the starting switch 8a, the front trunk open and close switch 8b, the seat open and close switch 8c or the fuel filling port open and close switch 8d, the unlocking process part 11a of the vehicle control device 10 sends the response demand information to the portable device 30 (S111). The response process part 31b of the portable device 30 sends the identification information to the vehicle control device 10 without attaching the unlocking limitation instruction information since the instruction receive information is removed from the storage part 32 (S112). The unlocking process part 11a of the vehicle control device 10 executes the certification process for the portable device 30 on the basis of the identification information and judges whether the unlocking limitation instruction information is attached to the identification information or not (S113). The unlocking limitation instruction information is not attached to the identification information in the example. Accordingly, the unlocking process part 11a outputs a signal for unlocking the steering shaft 106, the ECU 2, the fuel filling port 111a, the seat 109, the front trunk 108 or the like to the actuator driving circuit 17 or 18, the solenoid driving circuit 19 or the relay driving circuit 16 to unlock the device subject to locking (S114). On the other hand, the condition observation process part 11b reads out the battery remaining quantity information from the storage part 12 to output a signal giving an instruction to turn on the indicator lamp 7a to the indicator lamp driving circuit 22 (S115).

In accordance with the keyless entry system 1 described above, the condition information and the remote operation information can be sent and received between the portable device 30 and the vehicle control device 10 even in the case that a passenger carries out a predetermined button operation to limit unlocking of the device subject to locking (the ECU 2, the steering shaft 106, the fuel filling port 111a, the seat 109 or the front trunk 108 in the description) of the motorcycle 100. This improves convenience of the keyless entry system.

The invention is not limited to the keyless entry system 1 described above. Various kinds of modification can be considered. In the keyless entry system 1 described above, the instruction receive information indicating that a passenger gives an instruction to limit unlocking of the device subject to locking is stored in the storage part 32 of the portable device 30, for example. The instruction receive information, however, may be stored in the storage part 12 of the vehicle control device 10. It may be arranged that, in the case that the instruction receive information is stored in the storage part 12, execution of no certification process for the portable device 30 by the unlocking process part 11a would limit unlocking of the device subject to locking. In this case, the condition information and the remote operation information may be sent and received between the portable device 30 and the vehicle control device 10 regardless of whether the instruction receive information is stored in the storage part 12 or not.

Further, the condition observation process part 11b may inform the portable device 30 of a condition of the motorcycle 100 on the basis of whether the instruction receive information is stored in the storage part 12 or not in the case that the vehicle control device 10 is arranged so that the instruction receive information would be stored in the storage part 12. The condition observation process part 11b judges whether the instruction receive information is stored in the storage part 12 or not when the starting switch 8a is turned on, for example. In the case that the instruction receive information is stored in the storage part 12, information indicating that the starting switch 8a is turned on is sent to the portable device 30 as the theft alarm information since there is a possibility that a person other than a proper passenger turns on the starting switch 8a. The portable device 30, which has received the theft alarm information, turns on the display part 38 in a predetermined mode. It may also be possible to provide an acoustic device in the portable device 30 in advance to make an alarm sound by means of the acoustic device.

In the above description, observed is whether the starting switch 8a or the like is turned on or not as an example of a process of observing a condition of the motorcycle 100 by means of the condition observation process part 11b. A process executed by the condition observation process part 11b, however, is not limited to the above. It may be possible, for example, to mount an inclination angle sensor for outputting a signal corresponding to an inclination angle of a vehicle body to the motorcycle 100. In this case, the condition observation process part 11b judges whether the vehicle body has fallen down or not on the basis of a signal inputted from the inclination angle sensor. In the case that the vehicle body is judged to have fallen down, information indicating the fact is sent to the portable device 30 as the condition information. The portable device 30 judges whether the instruction receive information is stored in the storage part 32 or not after receiving the condition information. There is a very strong possibility that a passenger is away from the vehicle body and does not see that the vehicle body has fallen down in the case that the instruction receive information is stored. Accordingly, the condition observation process part 31c of the portable device 30 turns on the display part 38 in a predetermined mode for the purpose of informing the passenger that the vehicle body has fallen down. In the case that the vehicle control device 10 is arranged so that the instruction receive information would be stored in the storage part 12, as described above, the condition observation process part 11b may judge whether the instruction receive information is stored in the storage part 12 or not for the purpose of judging whether the vehicle body has fallen down or not. In this case, the condition observation process part 11b may send information for giving a notice that the vehicle body has fallen down to the portable device 30 as the condition information when the instruction receive information is stored in the storage part 12.

Moreover, in the above description, the condition information indicating a condition of the motorcycle 100 or the portable device 30 and the remote operation information for remotely operating the motorcycle 100 are sent and received between the vehicle control device 10 and the portable device 30. The information to be sent or received, however, is not limited to the above. It may be possible to send information related to an external environment of the motorcycle 100 from the vehicle control device 10 to the portable device 30. A temperature sensor may be provided in the vehicle body in advance, for example, in order to detect the external environment of the motorcycle 100. In this case, the control part 11 of the vehicle control device 10 may detect the temperature of the outside on the basis of a signal inputted from the temperature sensor in accordance with a demand from the portable device 30 and send temperature information obtained on the basis of a result of the detection to the portable device 30.

### Description of the Reference Numerals and Signs

1: KEYLESS ENTRY SYSTEM
2: ENGINE CONTROL UNIT (DEVICE SUBJECT TO LOCKING)
3: STEERING LOCKING DEVICE
4: FUEL FILLING PORT LOCKING DEVICE
5: FLASHER
6: STORAGE PART LOCKING DEVICE
7: DISPLAY DEVICE
8: SWITCH GROUP
9: BATTERY
10: VEHICLE CONTROL DEVICE
11: CONTROL PART
12: STORAGE PART
13: WIRELESS INTERFACE PART
14: INPUT CIRCUIT
15: POWER SUPPLY CIRCUIT
16: RELAY DRIVING CIRCUIT
17, 18: ACTUATOR DRIVING CIRCUIT
19: SOLENOID DRIVING CIRCUIT
21: FLASHER DRIVING CIRCUIT
22: INDICATOR LAMP DRIVING CIRCUIT
30: PORTABLE DEVICE
31: CONTROL PART
32: STORAGE PART
33: WIRELESS INTERFACE PART
34: BATTERY
35: BATTERY REMAINING QUANTITY OBSERVATION CIRCUIT
36: OPERATION PART (INPUT DEVICE)
38: DISPLAY PART (INFORMATION DEVICE)
100: MOTORCYCLE
101: ENGINE
102: DRIVING FORCE TRANSMITTING MECHANISM
103: REAR WHEEL
104: FRONT WHEEL
105: FRONT FORK
106: STEERING SHAFT (LOCKABLE DEVICE)
107: HANDLE
108: FRONT TRUNK (LOCKABLE DEVICE)
109: SEAT (LOCKABLE DEVICE)
110: TRUNK
111: FUEL TANK
111a: FUEL FILLING PORT (LOCKABLE DEVICE)

## Claims

1. A keyless entry system (1) comprising:
a portable device (30); and
a vehicle control device (10) for carrying out a certification process for the portable device (30) to lock or unlock a vehicle lockable device (106) on the basis of a result of the certification process,
wherein the portable device (30) includes an input device (36) for receiving an instruction from a user and is adapted to send instruction information for giving an instruction to limit unlocking of the lockable device (106) to the vehicle control device (10) in accordance with the instruction received from the passenger by means of the input device (36),
and wherein the vehicle control device (10) is adapted to maintain locking of the lockable device (106) upon receiving the instruction information from the portable device (30).

2. The keyless entry system (1) according to Claim 1, wherein the portable device (30) is adapted to send identification information inherent in the portable device (30) together with the instruction information when the instruction information is sent, and the vehicle control device (10) is adapted to carry out the certification process on the basis of the identification information of the portable device (30).

3. The keyless entry system (1) according to Claim 1 or 2, wherein:
the portable device (30) further includes a storing device (32) for storing, as instruction receive information, information indicating that the input device (36) receives an instruction to limit unlocking of the lockable device (106) from a user when the input device (36) receives the instruction;
the vehicle control device (10) is adapted to send demand information for demanding a response from the portable device (30); and
the portable device (30) is adapted to send the instruction information to the vehicle control device (10) in the case of receiving the demand information from the vehicle control device (10) while the storing device (32) holds the instruction receive information.

4. The keyless entry system (1) according to Claim 3, wherein the portable device (30) further includes an information device (38) adapted to inform a user that the storing device (32) stores the instruction receive information.

5. The keyless entry system (1) according to any preceding Claim, wherein the portable device (30) is adapted to send and receive condition information related to a condition of the portable device (30) or a vehicle (100) to and from the vehicle control device (10).

6. The keyless entry system (1) according to any preceding Claim, wherein the portable device (30) further includes a battery remaining quantity detection circuit (35) for detecting remaining quantity of a battery (34) used as a driving source of the portable device (30) and is adapted to send information related to the battery remaining quantity as the condition information.

7. A vehicle (100) comprising a keyless entry system (1) according to any preceding claim.

8. The vehicle (100) according to claim 7, wherein the vehicle control device (10) of the keyless entry system (1) is mounted on the vehicle (100).
